# EUROPEAN PATENT SPECIFICATION

(11) **EP 1 574 490 B1**
(45) Date of publication and mention of the grant of the patent: **14.06.2006**
(21) Application number: 04005996.6
(22) Date of filing: 12.03.2004
(51) Int. Cl.: C04B 41/50, C09D 1/02

(54) **Method of producing a substance for treatment of surfaces**
Verfahren zur Herstellung einer Substanz zur Behandlung von Oberflächen
Procédé de production d'une substance pour le traitment de surfaces

(43) Date of publication of application: 14.09.2005
(73) Proprietor: Doumet, Joseph E., Dipl.-Ing., 75006 Paris (FR)
(72) Inventor: Doumet, Joseph E., Dipl.-Ing., 75006 Paris (FR)
(74) Representative: Tetzner, Michael

(56) References cited:
- EP-A- 0 952 127
- PATENT ABSTRACTS OF JAPAN vol. 0134, no. 79 (C-648), 18 October 1989 (1989-10-18) & JP 1 188581 A (KYOKADO ENG CO LTD), 27 July 1989 (1989-07-27)

## Description

The invention relates to a method of producing a substance for treatment of surfaces, a substance for treatment of surfaces, especially a product for water-repellent or waterproof treatment and for impregnation of a surface of solid building materials against liquids as well as against chemical, biological and mechanical corrosion and/or attrition and a method for treating a surface.

There are on the market numerous products or agents which are intended for painting or coating surfaces on solid building materials, such as for example walls, ceilings and/or floors of parts of buildings, water tanks, swimming pools, storage halls or the like, in order to waterproof these surfaces and/or to impregnate them against chemical, biological and/or mechanical corrosion. These known products may generally be rubber-based or plastic-based products (synthetic resin or epoxy resin) or also special paints. However, these known products which are available on the market have shown themselves to be frequently inadequate in their effect and in their durability, particularly when several requirements are to be met simultaneously, as is the case for example when surfaces are to be protected against liquids (particularly water) and also simultaneously against chemical, biological and/or mechanical corrosion, such as occurs for example in water reservoirs, swimming pools, storage halls and the like which are built in the open.

EP-A-0 952 127 discloses a product for waterproofing and impregnating a surface of solid building materials against liquids as well as against chemical and biological corrosion, comprising an aqueous solution product which contains silicon, calcium and sodium ions, wherein calcium oxide is dissolved in water with the aid of a dissolving agent added to the water, and wherein this aqueous solution product, after it has been applied to the surface of the building material and dried there, forms a glass-like surface.

JP-A-1 188 581 relates to a gel containing water glass and lime.

The object of the invention, therefore, is to create a method of producing a substance of treatment of surfaces, a substance for treatment of surfaces as well as a method for treating a surfaces in such a way that a substance is made available which is relatively simple and economical to produce as well as having many uses and being reliable and durable in its effect.

It is a further object of the invention to provide a method of producing a substance for treatment of surfaces, wherein the substance can easily be applied to a surface and can be stored for a long time.

This object is achieved by the features of claims 1, 9 and 10, respectively.

The method of producing a substance for treatment of surfaces according to the invention comprises the following steps:
a) preparing a first aqueous solution containing calcium hydroxide (Ca(OH)₂) in a quantity of water and a dissolving agent which is admixed with this quantity of water in order to increase the dissolution of calcium hydroxide (Ca(OH)₂);
b) preparing a second aqueous solution which contains water and sodium silicate;
c) mixing together said first aqueous solution with said second aqueous solution so that an aqueous solution product is formed which contains a gel of double sodium calcium silicate,
d) separating the gel of double sodium calcium silicate from the aqueous solution product by centrifugation.

According to the invention the substance for treatment of surfaces comprises a gel of double sodium calcium silicate and is produced by mixing together a first and a second aqueous solution, and, wherein said first aqueous solution contains calcium hydroxide in a quantity of water and a dissolving agent added to the water and wherein said second aqueous solution contains water and sodium silicate and wherein the gel of double sodium calcium silicate is separated from the aqueous solution product.

The method of treating a surface according to the invention comprises the following steps:
a) preparing a first aqueous solution containing calcium hydroxide (Ca(OH)₂) in a quantity of water and a dissolving agent which is admixed with this quantity of water in order to increase the dissolution of calcium hydroxide (Ca(OH)₂);
b) preparing a second aqueous solution which contains water and sodium silicate;
c) mixing together said first aqueous solution with said second aqueous solution so that an aqueous solution product is formed that contains a gel of double sodium calcium silicate,
d) separating the gel of double sodium calcium silicate from the aqueous solution product by centrifugation,
e) mixing the gel of double sodium calcium silicate with a liquid., preferably demineralized water, that evaporates at ambient temperature to produce a substance and
f) applying this substance to a surface.

Advantageous embodiments are the subject matter of the subordinate claims.

According to the invention there are two possibilities to provide calcium hydroxide in the first aqueous solution: It is possible to dissolve calcium oxide in a quantity of water to produce calcium hydroxide (Ca(OH)₂) or to add it as calcium hydroxide.

Particular importance is also given to the knowledge that calcium hydroxide only dissolves in water in extremely small quantities. In order to be able to dissolve a sufficient quantity of calcium hydroxide in the given quantity of water a suitable dissolving agent is admixed with it in order thereby to improve or to increase the dissolution of the calcium hydroxide. In this connection it should be mentioned that only approximately 1g of calcium hydroxide can be dissolved in one litre of water at ambient temperature. The solubility will even decrease at higher water temperatures.

It is known that certain products like saccharose, glycerin or phenol dissolved in water increase the solubility of calcium hydroxide in that solution. By the admixture of such a dissolving agent a multiple of this quantity of calcium hydroxide can be dissolved in the same quantity of water, so that this admixture makes it possible to dissolve a correspondingly larger quantity of calcium hydroxide in the same quantity of water and thereby to control the ratio of calcium hydroxide and sodium silicate in the prepared aqueous solution product.

Basically any dissolving agent which is suitable for dissolving an increased quantity of calcium hydroxide in the given quantity of water can be used in the quantity of water of the first aqueous solution. According to the present invention it is particularly preferred if sugar in the form of saccharose (C₁₂H₂₂O₁₁) or glycerin is dissolved as dissolving agent in the first aqueous solution in order to dissolve an increased quantity of calcium hydroxide therein.

It is preferred that the quantity of water of the first aqueous solution already comprises calcium hydroxide before adding the dissolving agent.

The second aqueous solution contains water and sodium silicate. By mixing together said first aqueous solution with said second aqueous solution an aqueous solution product is formed that contains a gel of double sodium calcium silicate.

However, it is not possible to apply for waterproofing with gel of double sodium calcium silicate a surface, because when the double sodium calcium silicate is precipitated, the aqueous solution contains the regenerated saccharose and/or the surplus of sodium silicate both soluble in water. If applied to a surface to be waterproofed only double sodium calcium silicate is not any more soluble after drying.

Then a separation of the gel of double sodium calcium silicate from the aqueous solution is a necessity.

As it is impossible to isolate the gel of double sodium calcium silicate from the aqueous solution by filtration on paper even under vacuum, the separation is performed by centrifugation. Before treatment of a surface the isolated gel of double sodium calcium silicate has to be mixed with a liquid, preferably demineralized water, that evaporates at ambient temperature to produce a substance which can be applied to a porous surface. The substance is absorbed or soaked up with the water by the pores of the porous surface and when dried, the double calcium sodium silicate closes the pores and thin cracks and thereby waterproofing the coated surface.

Instead of demineralized water it is also possible to use ethylic alcohol or the like.

The method to produce the gel of double sodium calcium silicate comprises the following:

### First aqueous solution:

The first aqueous solution is prepared by adding calcium oxide (quick lime) to a quantity of water. The calcium oxide reacts with water to produce calcium hydroxide (Ca(OH)₂). It is, however, also possible to directly add calcium hydroxide. Then a dissolving agent, like saccharose or glycerin is admixed with this solution in order to increase the dissolution of calcium hydroxide (Ca(OH)₂). This first aqueous solution becomes saturated by saccharose/glycerin and by calcium hydroxide.

### Example 1:

In one liter of water it is possible to add 35g of calcium hydroxide or 26,5g of calcium oxide. In order to dissolve this amount of calcium hydroxide/calcium oxide, 500g of saccharose is added.

### Second aqueous solution:

In a quantity of water sodium metasilicate pentahydrate (Na₂.SiO₃.6H₂O) or another sodium silicate soluble in water is dissolved. It is preferred to use the minimum amount of water that is needed to liquefy sodium silicate.

### Example 2:

This second aqueous solution may for example have a weight of 184g.

### Precipitation of the double sodium calcium silicate:

By mixing together said first aqueous solution with said second aqueous solution an aqueous solution product is formed which contains a gel of double sodium calcium silicate. This silicate has the formula: Ca.Na₂.SiO₃.6H₂O and a ratio of Ca/Na₂ of 0,87.

Amongst the various possible types of sodium silicate used here, in the tests on which the invention is based sodium metasilicate hexahydrate, which in the dissolved Amongst the various possible types of sodium silicate used here, in the tests on which the invention is based sodium metasilicate hexahydrate, which in the dissolved state can be used in the second aqueous solution, has proved very favourable. However, other formulas of sodium silicate may be used, if they are soluble in water.

According to the above-mentioned examples the total weight of the aqueous solution is:

| | | |
|---|---|---|
| 1^{st} solution: | 1000g water + 35g Ca(OH)₂ + 500g saccharose = | 1535g |
| 2^{nd} solution: | sodium metasilicate hexahydrate | 184g |

The ingredients of the two solutions have a total weight of 1719g. The mixed solution will result in 270g or 15,7% of double calcium sodium silicate.

The separated gel of double calcium sodium silicate is the intermediate substance for treating surfaces. This substance can be stored in well closed containers for a long time.

The user can mix this intermediate substance with demineralized water or another liquid that evaporates at ambient temperature (like ethylic alcohol) to obtain a substance that can be directly applied to a surface. The amount of liquid will depend on how the user wants to apply the substance (projection by compressed air, with a roller or brush, ...).

The substance is absorbed or soaked up with the water by the pores of the surface and when dried by evaporation, the double calcium sodium silicate closes the pores and thin cracks and thereby waterproofing and protecting the coated surface by a film of insoluble double sodium calcium silicate.

## Claims

1. Method of producing a substance for treatment of surfaces, with the following steps:
a) preparing a first aqueous solution containing calcium hydroxide (Ca(OH)₂) in a quantity of water and a dissolving agent which is admixed with this quantity of water in order to increase the dissolution of calcium hydroxide (Ca(OH)₂);
b) preparing a second aqueous solution which contains water and sodium silicate;
c) mixing together said first aqueous solution with said second aqueous solution so that an aqueous solution product is formed which contains a gel of double sodium calcium silicate precipitate,
d) separating the gel of double sodium calcium silicate from the aqueous solution product by centrifugation.

2. Method as claimed in Claim 1, **characterized in that** sugar in the form of saccharose is dissolved as dissolving agent in the first aqueous solution in order to dissolve an increased quantity of the calcium hydroxide (Ca(OH)₂).

3. Method as claimed in Claim 1, **characterized in that** glycerin is dissolved as dissolving agent in the first aqueous solution in order to increase the dissolution of the calcium hydroxide (Ca(OH)₂).

4. Method as claimed in Claim 1, **characterized in that** the quantity of water already comprises calcium hydroxide before adding the dissolving agent.

5. Method as claimed in Claim 1, **characterized in that** during the preparation of the first aqueous solution, calcium oxide is dissolved in the quantity of water to produce calcium hydroxide.

6. Method as claimed in Claim 1, **characterized in that** during the preparation of the first aqueous solution, calcium hydroxide is added to the quantity of water.

7. Method as claimed in Claim 1, **characterized in that** the dissolving agent is dissolved till saturation in the water of the first aqueous solution in order to increase the amount of calcium hydroxide that can be dissolved.

8. Method as claimed in Claim 1, **characterized in that** said separated gel ofdouble sodium calcium silicate is mixed with a liquid, preferably demineralized water, that evaporates at ambient temperature.

9. Substance for treatment of surfaces, comprising a gel of double sodium calcium silicate; produced by mixing together a first and a second aqueous solution, and, wherein said first aqueous solution contains calcium hydroxide in a quantity of water and a dissolving agent added to the water and wherein said second aqueous solution contains water and sodium silicate and by separating the gel of double sodium calcium silicate from the aqueous solution product by centrifugation.

10. Method of treating a surface by the following steps:
a) preparing a first aqueous solution containing calcium hydroxide (Ca(OH)₂) in a quantity of water and a dissolving agent which is admixed with this quantity of water in order to increase the dissolution of calcium hydroxide (Ca(OH)₂);
b) preparing a second aqueous solution which contains water and sodium silicate;
c) mixing together said first aqueous solution with said second aqueous solution so that an aqueous solution product is formed that contains a gel of double sodium calcium silicate precipitate,
d) separating the gel of double sodium calcium silicate from the aqueous solution product by centrifugation,
e) mixing the gel of double sodium calcium silicate with a liquid, preferably demineralized water, that evaporates at ambient temperature to produce a substance
f) and applying this substance to a surface to waterproof it after drying.

## Patentansprüche

1. Verfahren zur Herstellung einer Substanz zur Behandlung von Oberflächen mit den folgenden Schritten:
a) Herstellen einer ersten wässrigen Lösung, die Calciumhydroxid (Ca(OH)₂) in einer Menge an Wasser und einen Lösungsvermittler enthält, der dieser Menge an Wasser beigemischt ist, um die Auflösung von Calciumhydroxid (Ca(OH)₂) zu steigern;
b) Herstellen einer zweiten wässrigen Lösung, die Wasser und Natriumsilikat enthält;
c) Zusammenmischen der ersten wässrigen Lösung und der zweiten wässrigen Lösung, so dass ein wässriges Lösungsprodukt gebildet wird, das ein Gel aus Natrium-Calcium-Doppelsilikat-Niederschlag enthält;
d) Abtrennen des Gels aus Natrium-Calcium-Doppelsilikat aus dem wässrigen Lösungsprodukt durch Zentrifugieren.

2. Verfahren nach Anspruch 1, **dadurch gekennzeichnet, dass** Zucker in der Form von Saccharose als Lösungsvermittler in der ersten wässrigen Lösung aufgelöst wird, um eine erhöhte Menge an Calciumhydroxid (Ca(OH)₂) aufzulösen.

3. Verfahren nach Anspruch 1, **dadurch gekennzeichnet, dass** Glycerin als Lösungsvermittler in der ersten wässrigen Lösung aufgelöst wird, um die Auflösung von Calciumhydroxid (Ca(OH)₂) zu steigern.

4. Verfahren nach Anspruch 1, **dadurch gekennzeichnet, dass** die Menge an Wasser vor der Zugabe des Lösungsvermittlers bereits Calciumhydroxid umfasst.

5. Verfahren nach Anspruch 1, **dadurch gekennzeichnet, dass** während der Herstellung der ersten wässrigen Lösung Calciumoxid in der Menge an Wasser aufgelöst wird, um Calciumhydroxid herzustellen.

6. Verfahren nach Anspruch 1, **dadurch gekennzeichnet, dass** während der Herstellung der ersten wässrigen Lösung Calciumhydroxid zur Menge an Wasser hinzugefügt wird.

7. Verfahren nach Anspruch 1, **dadurch gekennzeichnet, dass** der Lösungsvermittler bis zur Sättigung im Wasser der ersten Lösung aufgelöst wird, um die Menge an Calciumhydroxid zu steigern, die aufgelöst werden kann.

8. Verfahren nach Anspruch 1, **dadurch gekennzeichnet, dass** das abgetrennte Gel aus Natrium-Calcium-Doppelsilikat mit einer Flüssigkeit, vorzugsweise demineralisiertes Wasser, gemischt wird, die bei Umgebungstemperatur verdampft.

9. Substanz zur Behandlung von Oberflächen, umfassend ein Gel aus Natrium-Calcium-Doppelsilikat, hergestellt durch Zusammenmischen einer ersten und zweiten wässrigen Lösung, wobei die erste wässrige Lösung Calciumhydroxid in einer Menge an Wasser und einen dem Wasser zugefügten Lösungsvermittler enthält und wobei die zweite wässrige Lösung Wasser und Natriumsilikat enthält und ferner durch Abtrennen des Gels aus Natrium-Calcium-Doppelsilikat aus dem wässrigen Lösungsprodukt durch Zentrifugieren.

10. Verfahren zur Behandlung einer Oberfläche durch die folgenden Schritte:
a) Herstellen einer ersten wässrigen Lösung, die Calciumhydroxid (Ca(OH)₂) in einer Menge an Wasser und einen Lösungsvermittler enthält, der dieser Menge an Wasser beigemischt ist, um die Auflösung von Calciumhydroxid (Ca(OH)₂) zu steigern;
b) Herstellen einer zweiten wässrigen Lösung, die Wasser und Natriumsilikat enthält;
c) Zusammenmischen der ersten wässrigen Lösung und der zweiten wässrigen Lösung, so dass ein wässriges Lösungsprodukt gebildet wird, das ein Gel aus Natrium-Calcium-Doppelsilikat-Niederschlag enthält;
d) Abtrennen des Gels aus Natrium-Calcium-Doppelsilikat aus dem wässrigen Lösungsprodukt durch Zentrifugieren;
e) Zusammenmischen des Gels aus Natrium-Calcium-Doppelsilikat mit einer Flüssigkeit, vorzugsweise demineralisiertem Wasser, die bei Umgebungstemperatur verdampft, um eine Substanz herzustellen; und
f) Aufbringen dieser Substanz auf eine Oberfläche, um sie nach dem Trocknen wasserdicht zu machen.

## Revendications

1. Procédé pour produire une substance destinée à traiter des surfaces, le procédé comprenant les étapes qui consistent à :
a) préparer une première solution aqueuse qui contient de l'hydroxyde de calcium (CA(OH)₂) dans une certaine quantité d'eau et un agent de dissolution mélangé avec cette quantité d'eau pour augmenter la dissolution de l'hydroxyde de calcium (Ca(OH)₂),
b) préparer une deuxième solution aqueuse qui contient de l'eau et du silicate de sodium,
c) mélanger ladite première solution aqueuse avec ladite deuxième solution aqueuse de manière à former un produit en solution aqueuse qui contient un gel de silicate double de sodium et de calcium et
d) par centrifugation, séparer le gel de silicate double de sodium et de calcium du produit en solution aqueuse.

2. Procédé selon la revendication 1, **caractérisé en ce que** du sucre sous forme de saccharose est dissous comme agent de dissolution dans la première solution aqueuse pour dissoudre une plus grande quantité d'hydroxyde de calcium (Ca(OH)₂).

3. Procédé selon la revendication 1, **caractérisé en ce que** de la glycérine est dissoute comme agent de dissolution dans la première solution aqueuse pour augmenter la dissolution de l'hydroxyde de calcium (Ca(OH)₂).

4. Procédé selon la revendication 1, **caractérisé en ce que** la quantité d'eau contient déjà de l'hydroxyde de calcium avant l'addition de l'agent de dissolution.

5. Procédé selon la revendication 1, **caractérisé en ce que** lors de la préparation de la première solution aqueuse, on dissout de l'oxyde de calcium dans la quantité d'eau pour produire de l'hydroxyde de calcium.

6. Procédé selon la revendication 1, **caractérisé en ce que** lors de la préparation de la première solution aqueuse, on ajoute de l'hydroxyde de calcium à la quantité d'eau.

7. Procédé selon la revendication 1, **caractérisé en ce que** l'agent de dissolution est dissous jusqu'à saturation de l'eau de la première solution aqueuse pour augmenter la quantité d'hydroxyde de calcium qui peut être dissoute.

8. Procédé selon la revendication 1, **caractérisé en ce que** ledit gel de silicate double de sodium et de calcium séparé est mélangé avec un liquide qui s'évapore à température ambiante, de préférence de l'eau déminéralisée.

9. Substance destinée à traiter des surfaces, qui contient un gel de silicate double de sodium et de calcium produit en mélangeant une première solution aqueuse et une deuxième solution aqueuse, ladite première solution aqueuse contenant de l'hydroxyde de calcium dans une certaine quantité d'eau et un agent de dissolution ajouté à l'eau, ladite deuxième solution aqueuse contenant de l'eau et du silicate de sodium, et en séparant par centrifugation le gel de silicate double de sodium et de calcium du produit en solution aqueuse.

10. Procédé pour traiter une surface, le procédé comprenant les étapes qui consistent à :
a) préparer une première solution aqueuse qui contient de l'hydroxyde de calcium (CA(OH)₂) dans une certaine quantité d'eau et un agent de dissolution mélangé avec cette quantité d'eau pour augmenter la dissolution de l'hydroxyde de calcium (Ca(OH)₂),
b) préparer une deuxième solution aqueuse qui contient de l'eau et du silicate de sodium,
c) mélanger ladite première solution aqueuse avec ladite deuxième solution aqueuse pour former un produit en solution aqueuse qui contient un gel précipité de silicate double de sodium et de calcium,
d) par centrifugation, séparer le gel de silicate double de sodium et de calcium du produit en solution aqueuse,
e) mélanger le gel de silicate double de sodium et de calcium avec un liquide qui s'évapore à température ambiante, de préférence de l'eau déminéralisée, pour produire une substance et
f) appliquer cette substance sur une surface pour la rendre étanche après séchage.
